(19) 

Europäisches
Patentamt
European
Patent Office
Office européen
des brevets

(11)  **EP 2 682 782 A1**

(12)  **EUROPEAN PATENT APPLICATION**

(43) Date of publication:
**08.01.2014 Bulletin 2014/02**

(51) Int Cl.:
***G01S 15/87*** (2006.01)        ***G01S 15/93*** (2006.01)

(21) Application number: **13175174.5**

(22) Date of filing: **04.07.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **05.07.2012 GB 201211999**

(71) Applicant: **ROKE MANOR RESEARCH LIMITED
Romsey,
Hampshire SO51 0ZN (GB)**

(72) Inventors:
• **Spence, Christopher Robert
  Southampton, SO15 2PX (GB)**
• **Sparks, Edmund Peter
  Curdridge, SO32 2DA (GB)**

(74) Representative: **Wallin, Nicholas James et al
Withers & Rogers LLP
4 More London Riverside
London SE1 2AU (GB)**

(54)  **Sensor location method and system**

(57)    The present invention applies model-based processing to a sensor output from a sensor such as a sonar, radar, or laser range finder. In particular, embodiments of the invention use a priori knowledge of a model signal return expected from a particular object to identify the location of the object relative to the sensor (and/or vice versa). In some embodiments the object is augmented with reflectors that return the sensor signal back towards the sensor so that the object can be more easily detected by the sensor. In preferred embodiments the reflectors are arranged in an a priori known pattern on the object, to help identify both the location and the orientation of the object with respect to the sensor. In the preferred embodiment, the sensor is a sonar, mounted on an unmanned underwater vehicle (UUV).

FIG. 1

EP 2 682 782 A1

**Description**

Technical Field

The present invention relates to a method and system for determining the location of a sensor, and in particular in some embodiments to the relative location of a sensor mounted on a vehicle or other moving body with respect to another object. In preferred embodiments of the invention the sensor is of a type that emits a signal and detects objects in dependence on reflections of the emitted signal from the objects, by comparing the reflections against an *a priori* model of the object available to the sensor.

Background to the Invention and Prior Art

Image processing for computer vision is an established field. One technique that is known in the field of computer vision is that of model-based processing to identify objects within images. Generally, an a priori model having a number of image parameters representing an object to be detected within an image is first defined, and the model is then applied using various matching or best fit techniques to find corresponding objects in images matching the model. One early application of model based image processing is described by Tillet, R.D. Computers and Electronics in Agriculture, Volume 6, Issue 1, July 1991, Pages 51-61, which reports on the development of a model-based technique to locate pigs in fairly unstructured scenes. According to Tillet, model-based image processing is potentially a very powerful technique for identifying and classifying images and is particularly relevant for biological objects such as animals, which are difficult to define in numerical terms. Within Tillet's paper the model is based on an image of a typical pig, viewed from above. The model can then be rotated, translated, scaled and bent laterally to find a good match within an image of another pig. The output of the model helps to segment and classify the pig, and the information can be used to guide further localized image processing.

Whilst therefore known for image based computer vision, model-based processing has so far not been applied to other sensor modalities, and particularly active sensors that rely on returns of a transmitted signal.

Summary of the Invention

The present invention addresses the above by applying model-based processing to a sensor output from a sensor such as a Sonar, radar, or laser range finder. In particular, embodiments of the invention use a priori knowledge of a model signal return expected from a particular object to identify the location of the object relative to the sensor (and/or vice versa). In some embodiments the object is augmented with reflectors that return the sensor signal back towards the sensor so that the object can be more easily detected by the sensor. In some more preferred embodiments the reflectors are arranged in an a priori known pattern on the object, to help identify both the location and the orientation of the object with respect to the sensor. In the preferred embodiment, the sensor is a sonar, mounted on an unmanned underwater vehicle (UUV).

In view of the above, from one aspect the present invention provides a method of locating an object with respect to a sensor, the sensor being of a type that emits energy and detects reflections of the emitted energy in order to detect objects. The method comprises obtaining an a priori model of a configuration of the object, the configuration providing a set of expected sensor returns. Sensor data from a sensor scan is received, the sensor data comprising a plurality of candidate sensor returns that may represent the object to be located. Then, from the candidate sensor returns, a plurality of locations for the object are hypothesised in dependence on a subset of the candidate sensor returns and the a priori model. From the hypothesised plurality of locations, one or more of the hypothesised locations are determined to provide a best fit of the a priori model to the sensor data in dependence at least on the other candidate sensor returns than those in the subset that formed the one or more best fit hypothesised locations. In some embodiments, all of the candidate sensor returns are used in the determination.

In one embodiment the object is provided with energy reflectors arranged to reflect the energy of the sensor, the reflector positions being included in the configuration of the object in the a priori model, wherein the candidate sensor returns are candidate reflector location returns. That is to say, in order to locate the desired object, the energy retro-reflectors are positioned around the object in the known configuration and are able to provide a clear sensor return, capturing the energy of the sensor and directing at least a portion of the energy back in the direction of the sensor itself.

In one embodiment the received sensor data is filtered to remove therefrom candidate returns that do not meet one or more criteria. The one or more criteria may include one or more selected from the group comprising:

    a) relative signal strength compared to the signal strength of other candidate returns in the sensor data;
    b) absolute signal strength; and/or
    c) relative spatial location with respect to other candidate returns and the expected pattern of sensor returns given the object configuration in the a priori model.

Preferably, where filtering occurs, a candidate return is filtered from the group if its relative spatial location with respect to other candidate returns indicates that it could not form part of the object given the object configuration in the a priori model.

In one embodiment the hypothesising is systematic, and a location is hypothesised for each subset of $n$ candidate sensor returns that possibly fits the a priori model, wherein $n$ is preferably 3. Here, the determining step may also include calculating quality measures indicative of the fit of the hypothesised locations to the set of sensor data, and selecting a location as the best-fit in dependence on the quality measures.

In another embodiment the hypothesising is pseudo-random, in that a plurality of pseudo-random locations within the sensor search space are hypothesised as the object location. Here, the determining step includes calculating quality measures indicative of the fit of the pseudo-random locations to the set of sensor data, and re-sampling the plurality of pseudo-random locations in dependence on the quality measures. The quality measure calculations and the re-sampling iterate until convergence on a location or one or more other iteration termination conditions is reached. For example, a certain number of iterations may be permitted, or for a certain amount of time, or iteration may continue until the re-sampled locations are within a certain small distance of each other.

In one embodiment the quality measure for a location is a weight in azimuth and distance calculated in dependence on the position of the candidate sensor returns. Preferably, the location selected as the best-fit is the highest calculated weight, and the calculated weight may be such that it assumes Gaussian noise in both the azimuth and distance measurements. In one preferred embodiment the sensor is a sonar. Other sensors that may be used include laser rangefinders and radars.

A further aspect provides a method of controlling a vehicle, comprising sensing the location of an object using the method of the first aspect above, and autonomously controlling the movement of the unmanned vehicle in dependence on the sensed location of the object. The vehicle may be an unmanned vehicle, a manned submersible or a remotely operated vehicle (ROV). The unmanned vehicle is, therefore, able to locate an object itself, and subsequently use this location information to position itself with respect to the sensed object.

In one embodiment, the unmanned vehicle may be an unmanned underwater vehicle (UUV), and the sensor is a sonar. Additionally, the object may be a docking site, and autonomously controlling the movement of the unmanned underwater vehicle (UUV) may comprise moving the unmanned underwater vehicle (UUV) in dependence on the sensed location of the docking site, and then docking the unmanned underwater vehicle (UUV) on the docking site. Therefore, the unmanned underwater vehicle (UUV) can use the method of the present invention to determine the position of the docking site associated with a vessel such as a ship, and consequently dock itself based on the sensed location of the docking site.

Alternatively, the unmanned vehicle may be an unmanned aerial vehicle (UAV), and the sensor is a radar or laser-rangefinder. Preferably, the object may be a landing site, and autonomously controlling the movement of the unmanned aerial vehicle (UAV) may comprise moving the unmanned aerial vehicle (UAV) in dependence on the sensed location of the landing site, and landing the unmanned aerial vehicle (UAV) on the landing site.

Another aspect of the invention provides a system for locating an object with respect to a sensor, the sensor being of a type that emits energy and detects reflections of the emitted energy in order to detect objects. The system may comprise at least one memory and at least one processor, the at least one memory being arranged to store: i) an a priori model of a configuration of the object, the configuration providing a set of expected sensor returns; and ii) received sensor data from a sensor scan, the sensor data comprising a plurality of candidate sensor returns that may represent the object to be located. The at least one processor, may then be arranged in use to: i) from the candidate sensor returns, hypothesise a plurality of locations for the object in dependence, for a hypothesised location, on a subset of the candidate sensor returns and the a priori model; and ii) from the hypothesised plurality of locations, determine one or more of the hypothesised locations to provide a best fit of the a priori model to the sensor data in dependence at least on the other candidate sensor returns than those in the subset that formed the one or more best fit hypothesised locations.

A further aspect of the invention provides a vehicle comprising a sensor, a propulsion unit, a steering unit, and a system according to the above aspect.

Further features and advantages will be apparent from the appended claims.

Brief Description of the Drawings

Further features and advantages of the present invention will become apparent from the following description of an embodiment thereof, presented by way of example only, and by reference to the drawings, wherein like reference numerals refer to like parts, and wherein:

Figure 1 is a diagram illustrating an operating environment of an embodiment of the invention;

Figure 2 is a diagram illustrating an example object to be detected;
Figure 3 is a screenshot of an example sensor return in an embodiment of the invention;
Figure 4 is a block diagram of the component parts of an UUV in an embodiment of the invention;
Figure 5 is a block diagram of an example controller of the UUV;
Figure 6 is a flow diagram of an embodiment of the invention;
Figure 7 is a flow diagram of an embodiment of the invention;
Figure 8 is an example plot illustrating the determined location of an object according to a first method;
Figures 9 and 10 are example plots illustrating the determined location of an object according to a second method; and
Figure 11 is a graph showing how the location of an object may be determined in embodiments of the invention.

Description of the Embodiments

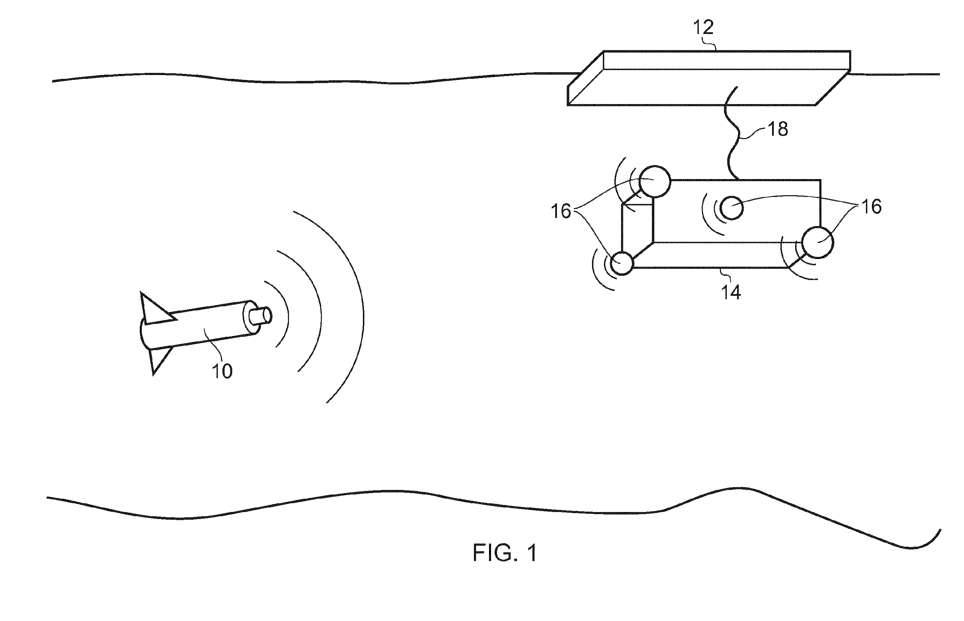

Figure 1 illustrates one typical operating environment of an embodiment of the invention. Here, an unmanned underwater vehicle (UUV) 10 is provided with an active sonar unit which emits sound energy and detects reflections thereof to detect objects in the water. The UUV in this case is associated with a vessel 12 such as a rig or ship, which provides a "parking cage" or "garage" 14 for the UUV to dock with, either for retrieval or replenishment. The parking cage 14 is provided with sonar retro-reflectors 16, and in this particular embodiment sonar reflectors known as Sonar-Bells®, available from Subsea Asset Location Technology Ltd (SALT), of Portland, Dorset, United Kingdom. SonarBells® are spherical buoys of different sizes that act to reflect an incident sonar wave back in the direction it came from. The spherical nature of the buoy and the material from which it is made results in a characteristic double return that allows for easier location thereof in the sonar return.

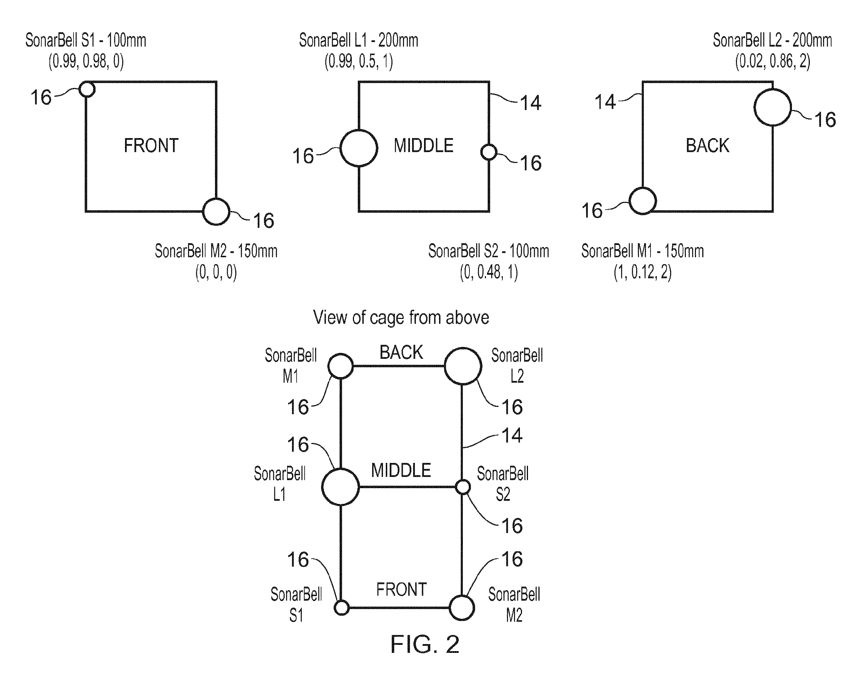

As shown in Figure 2, the cage 14 has different size sonar buoys mounted at different locations thereon. Specifically, in this embodiment, six buoys 16 of three different sizes are used and distributed at the front, middle, and back of the cage 14 in such a manner that each location has two buoys, one each of different sizes. By distributing the buoys 16 in this way the return therefrom can be used later to try and estimate the orientation of the cage, as well as its position with respect to the sonar on the UUV. It should be appreciated, however, that any number of retro-reflectors, of any size and orientation, may be used provided that they are arranged in an a priori known configuration such that a set of expected sensor returns may be obtained.

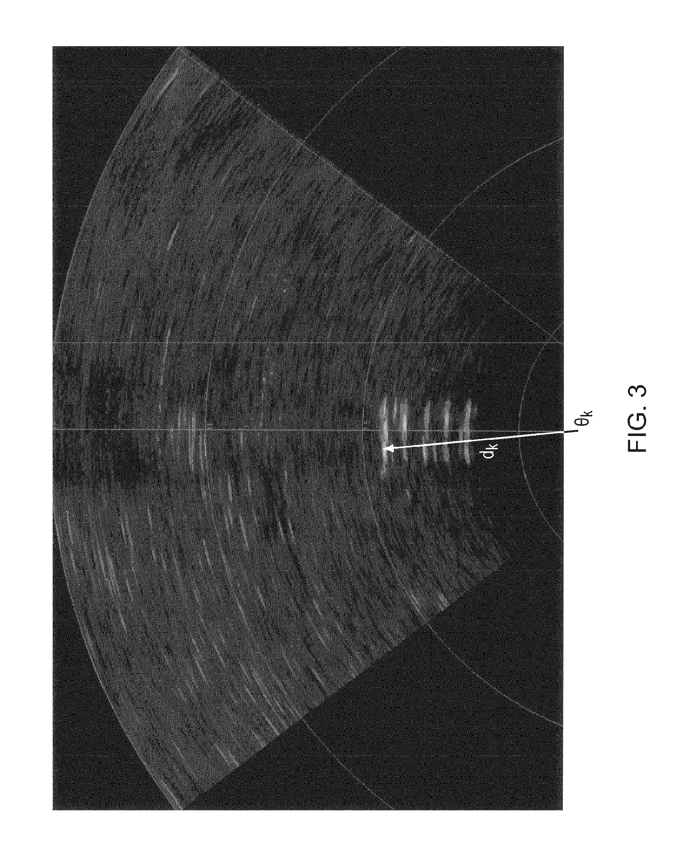

Figure 3 illustrates an example sonar return from sonar buoys such as the SonarBells®. In the sonar image six sonar buoys were detected, and can be seen clearly in the sonar data.

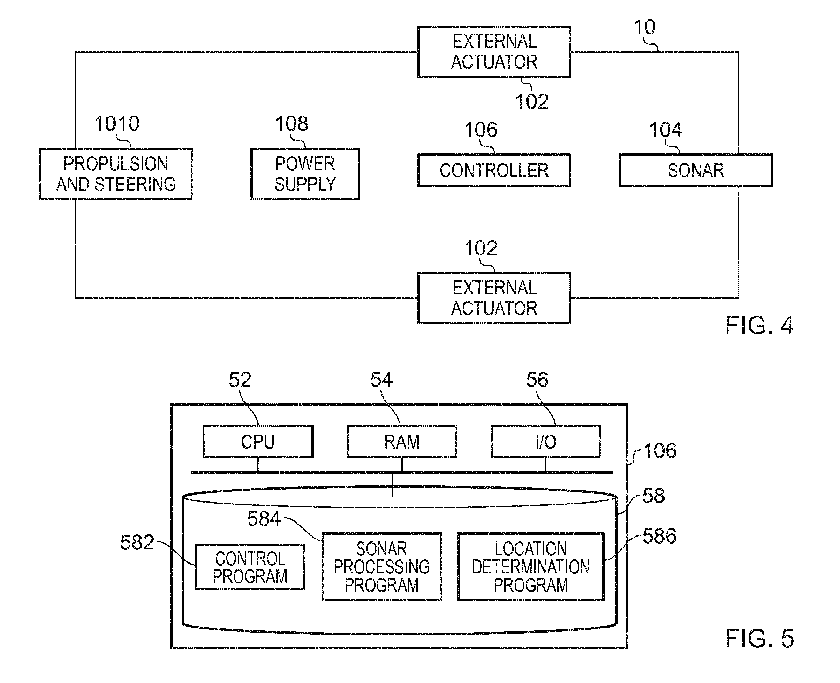

Figure 4 is a block diagram showing an example high level architectural configuration of the UUV 10. The UUV 10 will typically be provided with one or more external actuators 102, such as robot arms, cameras, lights, or the like, to allow the UUV to perform the tasks for which it is designed. The UUV is also provided with an active sonar 104, such as a Tritech Super SeaKing DST sonar, which is a mechanical scanning sonar available from Tritech International, of Westhill, Aberdeenshire, United Kingdom. A controller 106 that controls the actions of the UUV is also provided, as is a power supply 108 such as a battery or the like, and a propulsion and steering unit 1010 that propels and steers the UUV on command from the controller. For example, the UUV may be an inspection vehicle for inspecting oil pipelines, well heads, or other underwater installations.

The controller 106 is shown in more detail in Figure 5. Here it can be seen that the controller 106 comprises a central processing unit 52, provided with memory 54 and an input/output interface 56 to allow the controller to interface with and control the other components of the UUV. A computer readable storage medium 58 such as a hard disk drive, flash memory, or the like is also provided, upon which is stored several software programs which when run by the CPU 52 allow the CPU 52 to control the UUV 10. Specifically, a control program 582 is provided that contains instructions to allow the CPU to control the UUV in its assigned tasks, as well as to control the basic functioning of the UUV, such as propulsion and steering. The control program 582 may in reality be several different programs, and the further operation of such is beyond the scope of the present description. In addition to the control program, a sonar processing program 582 is also provided that acts to process sonar signals generated by the sonar 104 and provide sonar results to a location determination program 586, which then uses the sonar results to determine the location of the UUV with respect to the cage 14. The sonar processing program 582 may be specifically designed to detect the returns from known reflectors. For example, such software is available from SALT, referenced earlier, to aid in the detection of sonar bouys such as the SonarBells®. As such, the precise operation of the sonar processing program is also beyond the scope of the present description, although the output thereof is of interest as input to the location determination program 586. In this respect embodiments of the invention are particularly concerned with the operation of the location determination program 586.

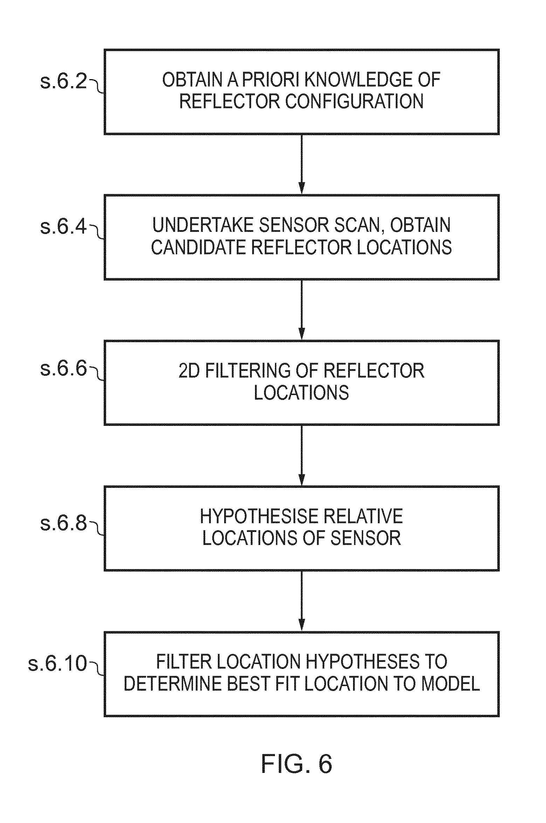

The overall operation of the present embodiment is shown in Figure 6. Specifically, the sonar 104 on the UUV 10 undertakes a scan, and the results are processed by the sonar processing program 584 in a manner known in the art, as discussed above, to provide a 2D sonar map. The location determination program 586 then takes the 2D sonar map and processes the information therein using a priori model based processing to identify within the map the location (and, if close by, orientation) of an object such as the parking cage 14, the a priori sonar return model for which is known in advance by the program. Having identified the desired object in the sonar return, the relative location of the UUV with respect to the object is found, and the UUV may, in some embodiments, then be controlled to move in dependence on the found location, for example to steer toward or to avoid the object.

Figure 6 gives further details of the operation of the location determination program 586. In particular, at s. 6.2 the program obtains a priori knowledge of the model that it is to look for in the sonar return. In the present embodiment, the object to be looked for is the parking cage 14, which is augmented with the sonar buoy retro-reflectors, of different sizes at different locations on the cage. For example, the program loads data relating to the model of the cage fitted with the sonar buoys into the memory, so that it can then be used by the program.

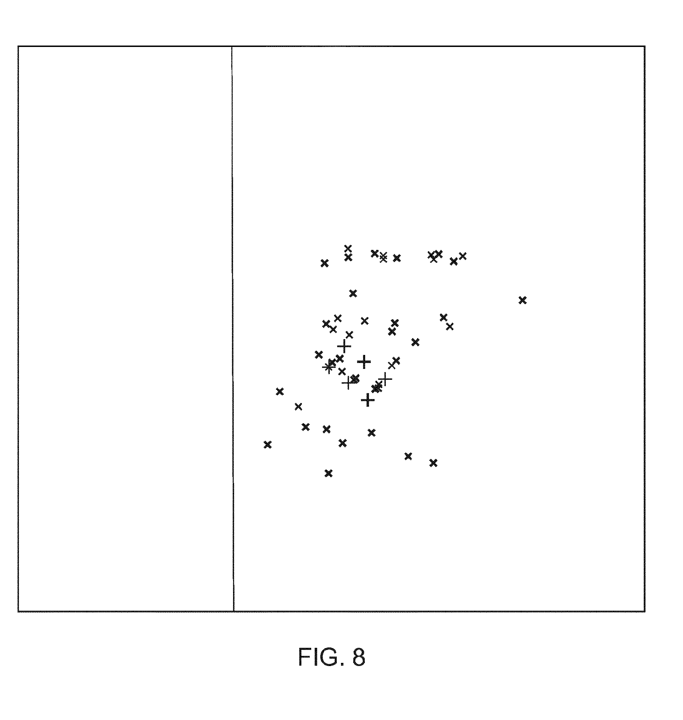

At s. 6.4 the sonar 104 is then controlled to undertake a scan, and the returning sonar data is processed by the sonar processing program 504, and a 2D map of candidate sonar buoy (reflector) locations provided to the location determination program 586. The processing of the sonar data to provide the 2D map is beyond the scope of the present application, suffice to say that suitable software is commercially available to use with the SonarBells®, and available from SALT, identified previously. An example 2D sonar return map is shown in Figure 8.

Having obtained the 2D map, at s.6.6 a 2D filtering process is undertaken by the location determination program 586, to remove possible sonar buoy location returns. This filtering is performed firstly on the returns individually, by looking at strength of return, signal to noise ratio, and the relative signal strength to other detections. Some of the candidate buoy location returns will thus be removed from the 2D map, as having signal characteristics that are too low for proper consideration, either absolutely, or relatively.

Further 2D filtering is also performed based on the location of the candidate sonar buoy locations returns relative to each other. In this respect, recall that the location determination program is provided with the a priori model of the sonar buoy locations on the cage 14, and hence has knowledge of the general configuration of sonar buoy returns expected to be seen. Hence, candidate sonar buoy returns in the 2D sonar data that are geographic outliers in that they are not surrounded by a sufficient number of other candidate returns to possibly match the a priori model may also be removed from consideration.

After conducting 2D filtering, at s.6.8 various relative locations of the desired object with respect to the sonar are hypothesized. In embodiments of the invention there are two ways to do this, either systematically or in a pseudo random way. In both cases there are potentially many thousands of possible location results (although there will likely be more with the systematic approach, and the number of hypotheses is controllable with the pseudo random approach), and a best fit match is then undertaken for each hypothesized location to try and match the candidate sonar buoy locations in the 2D data to the a priori model. In this respect, a weighting function is used to find a weight in both azimuth and distance for each hypothesized position given the candidate sonar buoy locations. This will find a location with the highest weight, which is selected as the location of the desired object i.e. the parking cage 14 in this embodiment. Where a pseudo random approach is first undertaken, several iterations may be undertaken, with spawning of new positions around those positions with the highest weights, until a location solution converges within appropriate termination conditions.

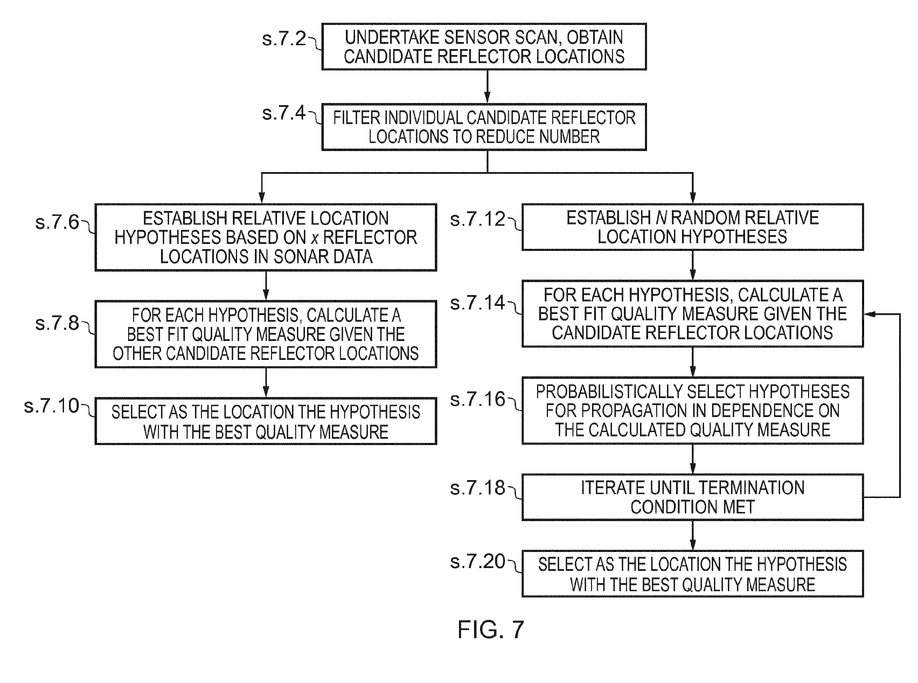

In some embodiments of the invention, both the systematic and pseudo random approaches are performed in parallel. Further details of each will be described next with respect to Figure 7.

Figure 7 gives further details of the operation of the location determination program, which is provided with the a priori model of the object to be located, in this example the cage 14 provided with the sonar buoys. At. S. 7.2 the sonar 104 undertakes a sensor scan, and the results are processed to provide candidate reflector locations, being the candidate locations of the sonar buoys 16 on the cage 14. This is provided as 2D candidate reflector location data, as shown in Figure 8, and described previously. At s. 7.4, the 2D processing is again performed, again as described previously with respect to Figure 6. In more detail, however, in one embodiment a configurable bound is set on the maximum number of detections (candidate reflector locations). The detections (candidate reflector locations) are sorted by signal strength and/or correlation coefficient. Only the best detections are selected for further processing. In the second step, each detection is considered and its 2D distance to every other detection is calculated. The distance is calculated by converting the azimuth and range to a Euclidean x, y coordinate and then applying Pythagoras' rule. For each detection a check is done as to whether there are sufficient other detections within range of that detection that are consistent with the arrangement of reflectors. This 2D filtering reduces the search space considerably.

Two different processing threads are then started, one to systematically search the candidate locations to find the best match, and the other to use a pseudo random technique that is able to manage the search space so that the location determination can occur in the time within sonar pings (or within some other controllable time, in any event). In this respect, one problem with the systematic search is that there can be many thousands or even millions of possible location solutions that need to checked, to determine the best match. However, by using a particle filter approach seeded with pseudo random locations then the number of possible locations to be matched can be kept to a manageable size.

Steps.7.6 to 7.10 illustrate the systematic approach. Firstly, at s.7.6 relative location hypotheses based on $x$, typically 3, reflector locations in the sonar data are found. For each set of three candidate reflector locations, a relative location of the object to the sonar is found as follows.

Let there be 3 reflectors or transponders with position vectors $\mathbf{B_0}$, $\mathbf{B_1}$ and $\mathbf{B_2}$ and there be a SONAR device at position vector $\mathbf{S}$. The distances to the reflectors or transponders, as measured by the SONAR device are denoted $d_0$, $d_1$ and $d_2$.

$$d_i = \left\| \mathbf{B}_i - \mathbf{S} \right\|, \qquad i = 0, 1, 2 \qquad (1.1)$$

Reset the origin to be at $\mathbf{B_2}$. The SONAR position in this new coordinate system is denoted P and the bell locations R0, R1, R2. i.e.

$$\mathbf{R}_i \equiv \mathbf{B}_i - \mathbf{B_2}, \qquad i = 0,1,2 \qquad (1.2)$$

$$\mathbf{P} \equiv \mathbf{S} - \mathbf{B_2} \qquad (1.3)$$

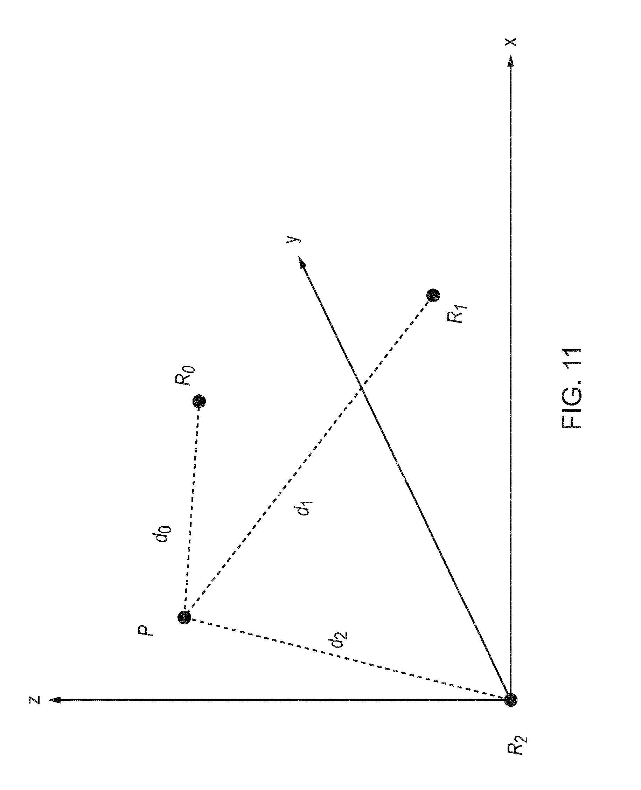

Figure 11 shows the arrangement with the origin reset, so:

$$d_i = \left\| \mathbf{R}_i - \mathbf{P} \right\|, \qquad i = 0, 1, 2 \qquad (1.4)$$

This can be written without loss of generality as:

$$\text{where}$$

$$P = c_0 R_0 + c_1 R_1 = c_2 Q \qquad (1.5)$$

$$Q \equiv R_0 \times R_1 \qquad (1.6)$$

To solve, the coefficients $\{c_i\}$ need to be found. Manipulation of 1.4 and 1.5 gives

$$P.R_0 = c_0 R_o^2 + c_1 R_0.R_1 = \frac{(d_2^2 + R_0^2 - d_0^2)}{2} \qquad (1.7)$$

$$P.R_1 = c_0 R_0.R_1 + c_1 R_1^2 = \frac{(d_2^2 + R_1^2 - d_1^2)}{2} \qquad (1.8)$$

These can be written as simultaneous linear equations to be solved for $\{c_0, c_1\}$:

$$\begin{bmatrix} R_0{}^2 & R_0 . R_1 \\ R_0 . R_1 & R_1{}^2 \end{bmatrix}\begin{bmatrix} c_0 \\ c_1 \end{bmatrix} = \begin{bmatrix} \left(d_2{}^2 + R_0{}^2 - d_0{}^2\right)\big/ 2 \\ \left(d_2{}^2 + R_1{}^2 - d_1{}^2\right)\big/ 2 \end{bmatrix} \qquad (1.9)$$

algebraically

$$Mc = v \qquad (1.10)$$

To find $c_2$ use:

$$P^2 = d_2{}^2 = c.v + c_2{}^2 Q^2 \qquad (1.11)$$

There are two solutions for $c_2$, one the negative of the other. Substitute back to get **P**, then reset origin by adding $B_2$ to get **S**.

These 2 candidate positions can be resolved to a single position by either considering the azimuth angles or by looking at the position of other reflectors or transponders, if there are more than 3. There are a number of ways this can be done. The techniques described take both into account.

If there are only 3 bells, but these can be unambiguously identified, then azimuth alone can resolve the ambiguity. The technique is as follows:

Call the candidate solutions $S_0$ and $S_1$. Then the best solution $S_{ibest}$ is obtained by:

$$N_{i,k} = \frac{B_k - S_i}{|B_k - S_i|}, \qquad k = 0, 1, 2, \qquad i = 0, 1 \qquad (1.12)$$

$$i_{best} = \underset{i\left(\sum_k \left(\theta_k - \theta_2 - \left(N_{i,2} \times N_{i,k}\right).\hat{z}\right)\right)}{\mathrm{argmin}} \qquad (1.13)$$

where $\{\theta_k\}$ are the azimuth angles corresponding to the measurements $\{d_k\}$. The azimuth is the angle around the local z axis of the SONAR according to the right hand rule.

Having found hypothesized locations for each set of three candidate reflector locations in the sonar data, at s. 7.8 a best fit quality measure is then found for each hypothesis, given the other candidate reflector locations. This quality measure is found as follows.

The weight of the $i$th position, $w_i$, used assumes Gaussian noise in both the azimuth and distance measurements. The weight due to azimuth is thus:

$$w_i^{\theta} = \prod_k \frac{1}{\sqrt{2\pi\sigma_\theta{}^2}} \exp\left(-\frac{\Delta\theta_{ki}{}^2}{2\sigma_\theta{}^2}\right) \qquad (1.14)$$

where

$$\Delta\theta_{ki} = \text{atan2}\left(\sin\left(\theta_k - S_{ki}^\theta\right), \cos\left(\theta_k - S_{ki}^\theta\right)\right) \qquad (1.15)$$

and

$$S_{ki}^\theta = \text{atan2}(S_i.\hat{x} - B_k.\hat{x}, \; B_k.\hat{y} - S_i.\hat{y}) - \theta_k \qquad (1.16)$$

where k = 0..K where K is the number of bells in the system. $\Sigma_\theta$ is the uncertainty in the azimuth measurement. $S_{ki}^\theta$ is constrained such that $-\pi < S_{ki}^\theta \leq \pi$ by adding or subtracting multiples of $2\pi$.

And the weight due to distance is thus:

$$w_i^d = \prod_k \frac{1}{\sqrt{2\pi\sigma_d^2}} \exp\left(-\frac{\left(\left|B_k - S_i\right| - d_k\right)}{2\sigma_d^2}\right) \qquad (1.17)$$

$d_k$ is the measured distance to the $k^{\text{th}}$ reflector. $\Sigma_d$ is the uncertainty in the distance measurement.

The weights are then combined. The log of these weights are usually used in the calculation as it is a faster calculation and is more accurate when the weight values get very small. The normalisation factors in the Gaussians are the same for all measurements, so are ignored. The combined log weight $W_i$ is thus:

$$W_i = \sum_k \left(\frac{\left(\left|B_K - S_i\right| - d_k\right)}{2\sigma_d^2} - \frac{\Delta\theta_{ki}^2}{2\sigma_\theta^2}\right) \qquad (1.18)$$

The best hypothesis $i_{\text{best}}$ is thus:

$$i_{\text{best}} = \underset{i(W_i)}{\text{argmax}} \qquad (1.19)$$

The location that has the highest weight is thus selected, at s.7.10.

One problem with the systematic approach noted above is that there may be too many hypothesised locations to check within a reasonable amount of time, especially if the location is being used for real-time navigation of an autonomous vehicle. To get around this, therefore, another way to reduce the search space is to fix the number of solutions to be considered. To do this in the present embodiment an iterative technique is used based on a Particle Filter. The iterative approach replaces the linear algebra described in equations 1.1 to 1.11 above, however the weight calculation remains the same. The particle filter approach is as follows:

1. Generate a large number of candidate solutions (s. 7.12). In the experiments performed, this was done by pseudo randomly generating 2000 solutions in a shell around the SONAR. The average radius of the shell is the average detection distance, and the thickness is a multiple of the standard deviation of all detection distances. Another approach would be to seed the algorithm with the results of the linear algebra approach of equations 1.1 to 1.11 above, with random noise added. In that case the Particle filter approach is then used in subsequent calculation of positions as the sonar moves.

2. Apply 2D filtering, as above, to the detections (optional). In this Particle Filter approach, 2D filtering has the additional benefit of reducing the number of false local minima that can be accidentally found using the iterative approach.

3. At s.7.14 each candidate solution is then given a weight according to equation 1.18.

The approximate result from the current iteration is then the highest weighted solution. The uncertainty in the candidate solution can be calculated by considering the distribution and weights of the other solutions.

4. At s.7.16, use the weights generated in step 7.14 to generate a new set of candidate solutions (described in detail below). Measure a new set of detections (if available) then continue from point 2 above.

5. The algorithm proceeds either continuously, if the sonar is to be tracked over time, or stops after a fixed number of iterations is reached, or when the uncertainty is below a certain value (s.7.18 and s.7.20)

In order to generate the new set of candidate solutions, i.e. point 4 above (s.7.16), first calculate a normalisation constant, $\eta$.

$$\eta = \sum_i \exp(W_i) \qquad (1.20)$$

Resample by selecting solutions at random a large number of times (2000 in the experiments performed), with replacement, such that each solution has a probability $P_i$ of being selected, given by:

$$P_i = \frac{\exp(W_i)}{\eta} \qquad (1.21)$$

For each solution, then apply a motion model. For the experiments performed so far, the SONAR was approximately stationary, so the motion model consists of applying Gaussian noise to the position and azimuth of the solution. If the sonar is moving, then a linear and angular velocity component may also be added at this stage.

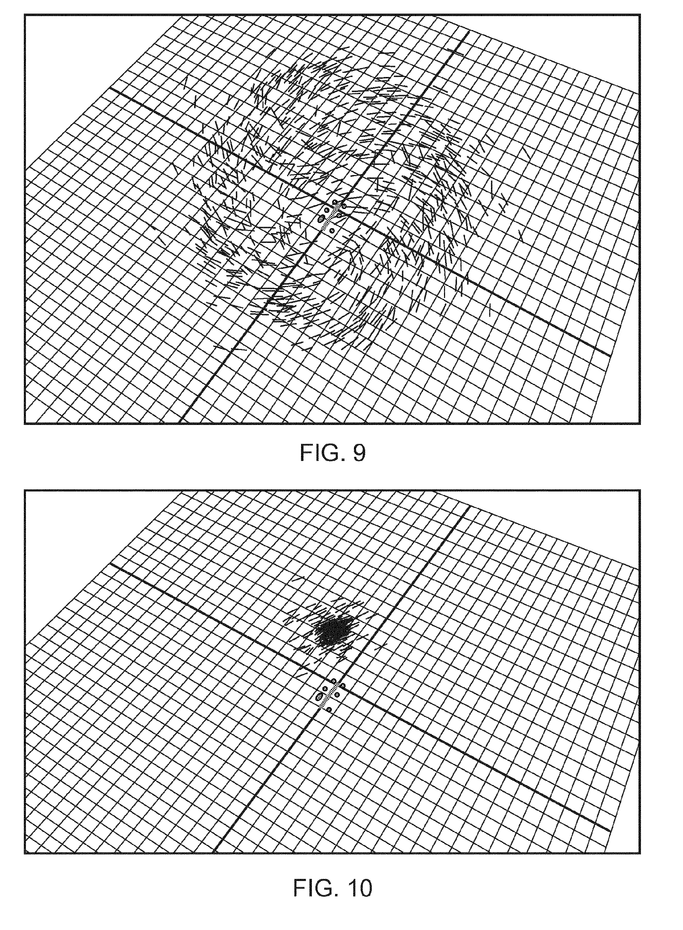

Figures 9 and 10 illustrate the operation of the pseudo random particle filter approach. In particular, Figure 9 shows that pseudo random positions may be initially selected all around the sonar search space, whilst Figure 10 illustrates that the positions rapidly converge to the correct location.

With the above, therefore, the location of a sensor such as a sonar may be found with respect to a desired object, the a priori model of which is known to the sensor in advance so that the sensor may detect the object in its returned sensor data. The location may be found in two ways, either systematically, or using a pseudo random particle filter, but in both cases a quality measure is found for hypothesised locations based on candidate sensor returns in the sensor data matching the a priori model. In one preferred embodiment the sensor is a sonar, and the desired object is fitted with sonar reflectors in a known configuration, which are then used to match to the model.

In other embodiments, different sensors may be used, and in particular a radar, or laser rangefinder. In both cases the object to be located may be fitted with appropriate reflectors to reflect the incident sensor energy back to the sensor. The reflectors are preferably in a known configuration and incorporated into the model stored at the sensor, to help with identification of both location and orientation.

However, it is not necessary for both location and orientation of the object to be resolvable straight away, as orientation may be resolved once the vehicle is closer to the object. Likewise, larger objects will be located more accurately from further away. For example, an oil rig will be detected and accurately located from further away than the parking cage of the embodiment.

Embodiments of the invention may find a number of uses, such as for navigation of vehicles, recovery of vehicles, as a safety back-up to a human operator, or for the control of the sensor emission itself. For example, if a sensor is being used to track an object and the location of the object with respect to the sensor is known from embodiments of the invention, the scan of the sensor can be restricted to the general location of the object. This has the effect of reducing the number of candidate locations, and hence lightens the processing load.

In further embodiments the model itself may be augmented, for example with navigational features, such as positions of hazards which are not detectable by the sensor. For example, where the sensor is a sonar, the model may be augmented with the location of navigation hazards to the UUV such as nets, mooring cables, or the like, so that the UUV knows not to approach the hazards.

In addition, the model could be augmented with user interface features, that cause the a particular display on an operator screen when the model determines that a particular location has been reached. For example, for docking operations of a UUV, or landing operations for a UAV, an operator display may be augmented with guidance markings to indicate approach directions to the docking/landing area.

In the above described embodiments a best fit of the model to the hypothesised locations is found by calculating a weight in distance and azimuth for each hypothesis. In other embodiments different techniques may be used to reduce the number of hypotheses. For example, given that the hypotheses are based on matching three candidate reflector locations in the sonar data, of the hypotheses those that match four candidate reflector locations may be found. Then, of those hypotheses that match four candidate locations, a check is made to see which will match five candidate reflector locations, and so on, until one or a small number of hypotheses are found that match the number of candidate reflector locations known to be on the object from the a priori model. Where more than one such location hypothesis is still live at this point, a quality measure such as the weight described previously may be used to decide between the candidate hypotheses.

In addition, in some embodiments of the invention the a priori model is augmented with information relating not simply to the location of reflectors on an object, but also to the expected type or size of reflection expected. For example, in the case of the SonarBells® which come in different sizes, different strength returns can be expected from the bouys of different sizes. By knowing the distribution of the sonar buoys of different sizes across an object in the a priori model, this distribution can then be looked for in the returned sonar data, as well as relative location, to help improve location matching and object orientation determination.

In further embodiments of the present invention, the retro-reflectors may be placed merely in the vicinity of the object to be detected. For example, in Figure 1, the sonar retro-reflectors 16 may be positioned on the rope 18 connecting the cage 14 to the vessel 12, and the a priori model is established based on this distribution of the buoys 16.

Various further modifications, whether by way of addition, deletion or substitution may be made to the above described embodiment to provide further embodiments, any and all of which are intended to be encompassed by the appended claims.

**Claims**

1. A system for locating an object with respect to a sensor, the sensor being of a type that emits energy and detects reflections of the emitted energy in order to detect objects, the system comprising:

   at least one memory in which is stored:

      i) an a priori model of a configuration of the object, the configuration providing a set of expected sensor returns; and
      ii) received sensor data from a sensor scan, the sensor data comprising a
      plurality of candidate sensor returns that may represent the object to be located;

   and at least one processor, arranged in use to:

      i) from the candidate sensor returns, hypothesise a plurality of locations for the object in dependence, for a hypothesised location, on a subset of the candidate sensor returns and the a priori model; and
      ii) from the hypothesised plurality of locations, determine one or more of the hypothesised locations to provide a best fit of the a priori model to the sensor data in dependence at least on the other candidate sensor returns than those in the subset that formed the one or more best fit hypothesised locations.

2. A system according to claim 1, wherein the object is provided with energy reflectors arranged to reflect the energy of the sensor, the reflector positions being included in the configuration of the object in the a priori model, wherein the candidate sensor returns are candidate reflector location returns.

3. A system according to claims 1 or 2, wherein the processor is further arranged to filter the received sensor data to remove therefrom candidate returns that do not meet one or more criteria.

4. A system according to claim 3, wherein the one or more criteria include one or more selected from the group comprising:

   a) relative signal strength compared to the signal strength of other candidate returns in the sensor data;
   b) absolute signal strength; and/or
   c) relative spatial location with respect to other candidate returns and the expected pattern of sensor returns given the object configuration in the a priori model.

5. A system according to claims 3 or 4, wherein a candidate return is filtered from the group if its relative spatial location with respect to other candidate returns indicates that it could not form part of the object given the object configuration in the a priori model.

6. A system according to any of claims 1 to 5, wherein the hypothesising is systematic, and a location is hypothesised for each subset of $n$ candidate sensor returns that possibly fits the a priori model, wherein $n$ is preferably 3; wherein the determining includes calculating quality measures indicative of the fit of the hypothesised locations to the set of sensor data, and a location is selected as the best-fit in dependence on the quality measures.

7. A system according to any of claims 1 to 6, wherein the hypothesising is pseudo-random, in that a plurality of pseudo-random locations within the sensor search space are hypothesised as the object location; wherein the determining includes calculating quality measures indicative of the fit of the pseudo-random locations to the set of sensor data, and re-sampling the plurality of pseudo-random locations in dependence on the quality measures, the quality measure calculations and the re-sampling iterating until convergence on a location or one or more other iteration termination conditions is reached.

8. A system according to claims 6 or 7, wherein the quality measure for a location is a weight in azimuth and distance calculated in dependence on the position of the candidate sensor returns, wherein the location selected as the best-fit is the highest calculated weight, and wherein the calculated weight assumes Gaussian noise in both the azimuth and distance measurements.

9. A system according to any of claims 1 to 8, wherein the sensor is a sonar.

10. A vehicle, comprising:

   a sensor;
   a propulsion unit;
   a steering unit; and
   a system according to any of claims 1 to 8.

11. A vehicle according to claim 10, wherein the vehicle is:

   1) an unmanned underwater vehicle (UUV), and the sensor is a sonar; or
   2) an unmanned aerial vehicle (UAV), and the sensor is a radar or laser-rangefinder; or
   3) a manned submersible; or
   4) a remotely operated vehicle (ROV).

12. A method of locating an object with respect to a sensor, the sensor being of a type that emits energy and detects reflections of the emitted energy in order to detect objects, the method comprising:

   obtaining an a priori model of a configuration of the object, the configuration providing a set of expected sensor returns;
   receiving sensor data from a sensor scan, the sensor data comprising a plurality of candidate sensor returns that may represent the object to be located;
   from the candidate sensor returns, hypothesising a plurality of locations for the object in dependence, for a hypothesised location, on a subset of the candidate sensor returns and the a priori model;
   from the hypothesised plurality of locations, determining one or more of the hypothesised locations to provide a best fit of the a priori model to the sensor data in dependence at least on the other candidate sensor returns than those in the subset that formed the one or more best fit hypothesised locations.

13. A method of controlling a vehicle, comprising sensing the location of an object using the method of claim 12, and autonomously controlling the movement of the vehicle in dependence on the sensed location of the object.

14. A method according to claim 13, wherein the object is a docking site, wherein the vehicle is an unmanned underwater vehicle (UUV), and wherein autonomously controlling the movement of the unmanned underwater vehicle (UUV) comprises:

   a) moving the unmanned underwater vehicle (UUV) in dependence on the sensed location of the docking site; and
   b) docking the unmanned underwater vehicle (UUV) on the docking site.

**15.** A method according to claim 14, wherein the object is a landing site, wherein the vehicle is an unmanned aerial vehicle (UAV), and wherein autonomously controlling the movement of the unmanned aerial vehicle (UAV) comprises:

    a) moving the unmanned aerial vehicle (UAV) in dependence on the sensed location of the landing site; and
    b) landing the unmanned aerial vehicle (UAV) on the landing site.

FIG. 1

SonarBell S1 - 100mm
(0.99, 0.98, 0)

SonarBell L1 - 200mm
(0.99, 0.5, 1)

SonarBell L2 - 200mm
(0.02, 0.86, 2)

16

FRONT

14

14

16

MIDDLE

16

16

BACK

16

16

16

SonarBell M2 - 150mm
(0, 0, 0)

SonarBell S2 - 100mm
(0, 0.48, 1)

SonarBell M1 - 150mm
(1, 0.12, 2)

View of cage from above

SonarBell
M1

BACK

SonarBell
L2

16

16

16

14

SonarBell
L1

MIDDLE

SonarBell
S2

16

16

16

SonarBell
S1

FRONT

16

SonarBell
M2

FIG. 2

FIG. 3

FIG. 4

FIG. 5

s.6.2 — OBTAIN A PRIORI KNOWLEDGE OF REFLECTOR CONFIGURATION

s.6.4 — UNDERTAKE SENSOR SCAN, OBTAIN CANDIDATE REFLECTOR LOCATIONS

s.6.6 — 2D FILTERING OF REFLECTOR LOCATIONS

s.6.8 — HYPOTHESISE RELATIVE LOCATIONS OF SENSOR

s.6.10 — FILTER LOCATION HYPOTHESES TO DETERMINE BEST FIT LOCATION TO MODEL

FIG. 6

```
s.7.2 ──┐  ┌──────────────────────────────────┐
        └─▶│ UNDERTAKE SENSOR SCAN, OBTAIN    │
           │ CANDIDATE REFLECTOR LOCATIONS    │
           └──────────────────────────────────┘
                          │
                          ▼
s.7.4 ──┐  ┌──────────────────────────────────┐
        └─▶│ FILTER INDIVIDUAL CANDIDATE       │
           │ REFLECTOR LOCATIONS TO REDUCE     │
           │ NUMBER                            │
           └──────────────────────────────────┘
```

s.7.6 — ESTABLISH RELATIVE LOCATION HYPOTHESES BASED ON *x* REFLECTOR LOCATIONS IN SONAR DATA

s.7.8 — FOR EACH HYPOTHESIS, CALCULATE A BEST FIT QUALITY MEASURE GIVEN THE OTHER CANDIDATE REFLECTOR LOCATIONS

s.7.10 — SELECT AS THE LOCATION THE HYPOTHESIS WITH THE BEST QUALITY MEASURE

s.7.12 — ESTABLISH *N* RANDOM RELATIVE LOCATION HYPOTHESES

s.7.14 — FOR EACH HYPOTHESIS, CALCULATE A BEST FIT QUALITY MEASURE GIVEN THE CANDIDATE REFLECTOR LOCATIONS

s.7.16 — PROBABILISTICALLY SELECT HYPOTHESES FOR PROPAGATION IN DEPENDENCE ON THE CALCULATED QUALITY MEASURE

s.7.18 — ITERATE UNTIL TERMINATION CONDITION MET

s.7.20 — SELECT AS THE LOCATION THE HYPOTHESIS WITH THE BEST QUALITY MEASURE

FIG. 7

FIG. 8

FIG. 9

FIG. 10

FIG. 11

Europäisches
Patentamt

European
Patent Office

Office européen
des brevets

# EUROPEAN SEARCH REPORT

Application Number

EP 13 17 5174

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TRIGGS B ET AL: "Sonar Localisation for Mobile Robots: A Model-Based Approach", 19920811; 19920811 - 19920814, 11 August 1992 (1992-08-11), pages 387-392, XP010287174, | 1,2,12 | INV.<br>G01S15/87<br>G01S15/93 |
| Y | * Section 4 - 5; page 389 - page 391 * | 3-5,7, 9-11, 13-15 | |
| X | US 5 621 807 A (EIBERT MAX [DE] ET AL) 15 April 1997 (1997-04-15) * column 3, line 38 - column 6, line 43; figures 2-6 * | 1,6,8,12 | |
| Y | US 8 031 908 B2 (KAKINAMI TOSHIAKI [JP] ET AL) 4 October 2011 (2011-10-04) * column 5, lines 14-42; figure 4a * | 3-5,7 | |
| Y | US 6 317 387 B1 (D AMADDIO EUGENE R [US] ET AL) 13 November 2001 (2001-11-13) * column 5, line 55 - column 7, line 26; figures 1-3 * | 9-11, 13-15 | TECHNICAL FIELDS SEARCHED (IPC)<br><br>G01S |

The present search report has been drawn up for all claims

| Place of search | Date of completion of the search | Examiner |
|---|---|---|
| Munich | 10 October 2013 | Fanjul Caudevilla, J |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

................................................................

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 13 17 5174

This annex lists the patent family members relating to the patent documents cited in  the above-mentioned European search report.
The members are as contained in the European Patent Office EDP file on
The European Patent Office is in no way liable for these particulars which are merely given for the purpose of information.

10-10-2013

| Patent document cited in search report | | | Publication date | Patent family member(s) | | Publication date |
|---|---|---|---|---|---|---|
| US 5621807 | A | | 15-04-1997 | NONE | | |
| US 8031908 | B2 | | 04-10-2011 | EP | 1939585 A1 | 02-07-2008 |
| | | | | JP | 4662147 B2 | 30-03-2011 |
| | | | | JP | 2007114056 A | 10-05-2007 |
| | | | | US | 2009052779 A1 | 26-02-2009 |
| | | | | WO | 2007046336 A1 | 26-04-2007 |
| US 6317387 | B1 | | 13-11-2001 | NONE | | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TILLET, R.D.** *Computers and Electronics in Agriculture,* July 1991, vol. 6 (1), 51-61